# EUROPÄISCHE PATENTANMELDUNG

(11) **EP 3 620 875 A1**
(43) Veröffentlichungstag der Anmeldung: **11.03.2020**
(21) Anmeldenummer: 18192702.1
(22) Anmeldetag: 05.09.2018
(51) Int. Cl.: G05B 19/409, G06F 9/54

(54) **HMI-SYSTEM FÜR EINE AUTOMATISIERUNGSANLAGE**

(71) Anmelder: Siemens Aktiengesellschaft, 80333 München (DE)
(72) Erfinder: Herberth, Harald, 90522 Oberasbach (DE); Strobel, Holger, 90556 Steinbach (DE)

(57) **Zusammenfassung**

Die Erfindung betrifft ein HMI-System (HS) für eine Automatisierungsanlage. Das HMI-System (HS) ist in einem Konfigurationsmodus betreibbar, in dem eine Benutzeroberfläche (SC) durch einen Benutzer für den Betrieb des HMI-Systems (HS) mit der Automatisierungsanlage konfiguriert werden kann. Das erfindungsgemäße HMI-System (HS) ist derart ausgestaltet, dass in dem Konfigurationsmodus durch den Benutzer ein oder mehrere Elemente (OL) konfiguriert werden können, um eine Verknüpfung eines jeweiligen Elements (OL) mit einem anpassbaren Code (CO1, CO2, COS) festzulegen, der eine Wechselwirkung zwischen dem HMI-System (HS) und einer externen, nicht zum HMI-System (HS) gehörigen Applikation (AP1, AP2, AP3) bei einer Aktivierung des jeweiligen Elements (OL) im Betrieb des HMI-Systems (HS) beschreibt.

## Beschreibung

Die Erfindung betrifft ein HMI-System (HMI = Human Machine Interface) für eine Automatisierungsanlage.

Benutzerschnittstellen bzw. HMI-Systeme zum Bedienen und Beobachten von Automatisierungsanlagen stellen in der Regel Möglichkeiten zur Verfügung, deren Benutzeroberflächen im Rahmen einer Projektierung anwenderspezifisch zu gestalten. Dabei kann der Benutzer entsprechende Elemente definieren und auf der Benutzeroberfläche zur deren späteren Verwendung im Betrieb des HMI-Systems hinterlegen. Solche Elemente sind beispielsweise Bedienelemente, die im Betrieb des HMI-Systems durch den Operator aufgerufen werden können, z.B. durch Berühren des Bedienelements auf einem Bildschirm. Das Bedienelement ist dabei mit einer Interaktion verknüpft, z.B. können Prozesswerte der bedienten Automatisierungsanlage auf der Benutzeroberfläche angezeigt werden.

Oftmals besteht das Bedürfnis, dass der spätere Verwender des HMI-Systems auch externe, nicht zu dem HMI-System gehörige Applikationen über eine Bedienung auf der Benutzeroberfläche des HMI-Systems aufrufen kann. Eine solche externe Applikation kann beispielsweise ein PDF-Viewer sein, mit dem ein Dokument aufgerufen wird, wie z.B. eine Bedienungsanleitung einer Komponente der Automatisierungsanlage, für welche das HMI-System genutzt wird. Ein weiterer Anwendungsfall ist das Öffnen eines Formulars in einer Textverarbeitungs- oder Tabellenkalkulationsprogramm, um z.B. aktuelle Daten der Benutzeroberfläche in dieses Formular zu übertragen. Die externen Applikationen können dabei gegebenenfalls auch auf Geräten laufen, die nicht Teil des HMI-Systems sind, wie z.B. Tablets oder Smartphones.

Derzeitige Lösungen zur Verwendung von externen Applikationen in einem HMI-System beruhen auf der vollständigen Integration der Applikationen mittels Container-/Komponenten-Technologien (z.B. ActiveX, WPF). Alternativ besteht die Möglichkeit, dass ein Benutzer eine externe Applikation unabhängig von dem HMI-System verwendet. Die vollständige Integration von externen Applikationen in einem HMI-System bietet zwar einen sehr hohen Komfort und die volle Kontrolle der Benutzeroberfläche im Benutzungskonzept der HMI-Anwendung. Die Integration ist jedoch auf vorbestimmte Produkte beschränkt, welche passende Integrations-Technologien bereitstellen. Es ist somit nicht möglich, die Nutzung von externen Applikationen in einem HMI-System flexibel zu definieren und anzupassen.

Aufgabe der Erfindung ist es deshalb, ein HMI-System für eine Automatisierungsanlage zu schaffen, mit dem einfach und flexibel externe Applikationen durch das HMI-System genutzt werden können.

Diese Aufgabe wird durch das HMI-System gemäß Patentanspruch 1 gelöst. Weiterbildungen der Erfindung sind in den abhängigen Ansprüchen definiert.

Das erfindungsgemäße HMI-System ist zur Bedienung einer Automatisierungsanlage vorgesehen. Der Begriff der Automatisierungsanlage ist dabei weit zu verstehen. Es kann sich um eine beliebige Anlage bzw. Maschine handeln, mit der ein Vorgang automatisiert durchgeführt wird. Insbesondere kann eine Automatisierungsanlage eine Fertigung oder einen Prozess automatisieren. Beispielsweise kann die Automatisierungsanlage eine Fertigungsstraße oder ein Logistiksystem darstellen.

Das erfindungsgemäße HMI-System ist in einem Konfigurationsmodus betreibbar, in dem eine Benutzeroberfläche durch einen Benutzer für den Betrieb des HMI-Systems mit der Automatisierungsanlage konfiguriert werden kann. Mit anderen Worten kann der Benutzer im Konfigurationsmodus die Bedienung der Automatisierungsanlage gemäß entsprechender Vorgaben bzw. Erfordernissen festlegen. In einer Variante der Erfindung wird dem Benutzer im Konfigurationsmodus eine graphische Benutzeroberfläche bereitgestellt, über welche der Benutzer die Konfiguration mittels graphischer Werkzeuge durchführen kann. Nichtsdestotrotz ist es auch möglich, dass der Benutzer die Konfiguration zumindest teilweise auch über die Erstellung entsprechender Skripte durchführt.

Das erfindungsgemäße HMI-System zeichnet sich dadurch aus, dass in dem Konfigurationsmodus durch den Benutzer eine Anzahl von Elementen (d.h. zumindest ein Element) konfiguriert werden kann, um eine Verknüpfung eines jeweiligen Elements mit einem anpassbaren Code festzulegen, wobei unter einem anpassbaren Code ein Code zu verstehen ist, der durch einen berechtigten Benutzer (insbesondere einem Systemintegrator) geändert werden kann. Der Code beschreibt dabei eine Wechselwirkung zwischen dem HMI-System und einer externen, nicht zum HMI-System gehörigen Applikation bei einer Aktivierung des jeweiligen Elements im späteren Betrieb des HMI-Systems, in dem die Automatisierungsanlage über das HMI-System bedient wird.

Das erfindungsgemäße HMI-System weist den Vorteil auf, dass eine flexible Anbindung von externen Applikationen an das HMI-System über spezielle Elemente erreicht wird, die mit veränderbarem Code verknüpft sind. Der Code kann dabei durch einen Systemintegrator vor der eigentlichen Projektierung des HMI-Systems festgelegt werden. Er kann jedoch auch noch zu einem späteren Zeitpunkt geeignet angepasst werden.

In einer besonders bevorzugten Ausführungsform des erfindungsgemäßen HMI-Systems ist der Code für zumindest einen Teil der Elemente und insbesondere alle Elemente ein textueller Code. Dieser kann besonders einfach und intuitiv durch einen Benutzer angepasst werden.

In einer bevorzugten Variante der obigen Ausführungsform ist der Code für zumindest einen Teil der Elemente und insbesondere alle Elemente ein Skript, insbesondere ein Batch-Skript und/oder ein Powershell-Skript und/oder ein Python-Skript.

Mit anderen Worten ist der entsprechende Code in einer Skriptsprache verfasst, die besonders einfach durch einen Benutzer verändert werden kann.

In einer weiteren Ausgestaltung des erfindungsgemäßen HMI-Systems sind ein oder mehrere Elemente der Anzahl von Elementen mit Bedienelementen verschaltet, welche durch eine Bedienung des Benutzers im Betrieb des HMI-Systems aktivierbar sind. Mit anderen Worten erfolgt in diesem Fall eine Aktivierung des entsprechenden Elements über die Aktivierung des damit verschalteten Bedienelements. Die Bedienelemente können z.B. entsprechende graphische Elemente auf der konfigurierten Benutzeroberfläche sein, die ein Benutzer zur Aktivierung über einen Touch-Screen antippen kann. Ebenso ist es möglich, dass die Bedienelemente über eine Tastatur und/oder eine Maus angewählt und aktiviert werden.

Ein jeweiliges konfigurierbares Element kann je nach Ausgestaltung unterschiedliche Verknüpfungen repräsentieren. In einer Variante ist für zumindest einen Teil der Elemente als Verknüpfung mit dem anpassbaren Code im Konfigurationsmodus ein Starten des anpassbaren Codes festlegbar. Gegebenenfalls kann die Verknüpfung ausschließlich ein Starten des anpassbaren Codes beschreiben. In einer weiteren Ausgestaltung ist für zumindest einen Teil der Elemente als Verknüpfung mit dem anpassbaren Code im Konfigurationsmodus eine Kommunikation eines gestarteten anpassbaren Codes mit dem HMI-System festlegbar. Ein Element kann dabei gegebenenfalls ausschließlich die Kommunikation mit dem gestarteten Code beschreiben. Ebenso kann ein Element zusätzlich auch das Starten des Codes gemäß der obigen Ausführungsform beschreiben.

In einer weiteren bevorzugten Ausführungsform beschreibt der Code für zumindest einen Teil der Elemente die Wechselwirkung zwischen HMI-System und externer Applikation basierend auf einer vorgegebenen Programmierschnittstelle, die durch die externe Applikation bereitgestellt wird. Hierbei können an sich bekannte Programmierschnittstellen zum Einsatz kommen, wie z.B. eine OLE-Automation-Schnittstelle (OLE = Object Linking and Embedding) und/oder eine COM-Schnittstelle (COM = Component Object Model) und/oder eine VBA-Schnittstelle (VBA = Visual Basic for Applications) und/oder eine DDE-Schnittstelle (DDE = Dynamic Data Exchange).

Nichtsdestotrotz kann das erfindungsgemäße HMI-System gegebenenfalls auch mit externen Applikationen wechselwirken, welche keine vorgegebene Programmierschnittstelle enthalten. In diesem Fall beschreibt der Code die Wechselwirkung zwischen HMI-System und externer Applikation basierend auf der Simulation von Benutzereingaben und Benutzerausgaben zwischen dem HMI-System und der externen Applikation. Für diese Simulation können an sich bekannte Werkzeuge aus dem Bereich der Test-Automatisierung genutzt werden.

In einer weiteren bevorzugten Ausführungsform umfasst die externe Applikation für zumindest einen Teil der Elemente eine graphische Anzeige. Diese Anzeige kann im späteren Betrieb des HMI-Systems auf dem Bildschirm wiedergegeben werden, auf dem auch die Benutzeroberfläche angezeigt wird, jedoch kann sie auch auf einem anderen Bildschirm dargestellt werden. Beispielsweise kann über die Anzeige ein digitales Dokument wiedergegeben werden.

In einer weiteren Ausgestaltung ist die externe Applikation für zumindest einen Teil der Elemente ein PDF-Viewer und/oder ein Tabellenkalkulationsprogramm (wie z.B. Excel) und/oder ein Textverarbeitungsprogramm (wie z.B. Word).

Neben dem erfindungsgemäßen HMI-System betrifft die Erfindung eine Automatisierungsanlage, welche das erfindungsgemäße HMI-System bzw. eine oder mehrere bevorzugte Varianten dieses HMI-Systems umfasst.

Ein Ausführungsbeispiel der Erfindung wird nachfolgend anhand der beigefügten Figur detailliert beschrieben. Diese Figur zeigt eine schematische Darstellung einer Variante des erfindungsgemäßen HMI-Systems.

Das in der Figur gezeigte HMI-System, welches beispielsweise auf WinCC mit entsprechenden Erweiterungen gemäß der Erfindung basieren kann, ist schematisch mit Bezugszeichen HS bezeichnet und erzeugt auf einer (nicht gezeigten) Anzeigeeinheit eine Benutzeroberfläche in der Form eines HMI-Screens SC. Je nach Ausführungsform kann es sich bei der Anzeigeeinheit z.B. um ein Operator-Panel handeln, sofern das HMI-System zur maschinen- bzw. anlagennahen Bedienung verwendet wird. Ebenso ist es möglich, dass das HMI-System zur zentralen Steuerung einer Anlage dient, wobei in diesem Fall das Display Teil einer Leitwarte ist.

Das HMI-System zeichnet sich durch einen speziellen Konfigurationsmodus aus, in dem ein Benutzer in der Form eines Projektierers die graphischen Bausteine auf der Benutzeroberfläche SC und deren Interaktion mit Parametern der Automatisierungsanlage im späteren Betrieb des HMI-Systems festlegt. In diesem Konfigurationsmodus kann der Projektierer u.a. spezielle Elemente OL konfigurieren. In der Figur ist ein einzelnes solches Element wiedergegeben, das nachfolgend auch als OpenLink-Element bezeichnet wird. In der hier beschriebenen Ausführungsform wird das OpenLink-Element im Rahmen seiner Konfiguration visuell auf der Benutzeroberfläche SC dargestellt und über graphische Werkzeuge auf der Benutzeroberfläche geeignet konfiguriert. Nichtsdestotrotz ist es auch möglich, dass die OpenLink-Elemente auf andere Weise ohne graphische Darstellung konfiguriert werden, z.B. indem ein Benutzer ein Skript zur Konfiguration des entsprechenden OpenLink-Elements erstellt.

Je nach Ausgestaltung können die OpenLink-Elemente in der konfigurierten Benutzerschnittstelle verschieden aktiviert werden. Die Art der Aktivierung wird dabei durch den Benutzer im Rahmen der Konfiguration des HMI-Screens festgelegt. Bei dieser Konfiguration können OpenLink-Elemente zum Beispiel in geeigneter Weise mit Prozesswerten der Automatisierungsanlage oder anderen Elementen des HMI-Screens mit an sich bekannten Mitteln des HMI-Systems verschaltet werden. In einer bevorzugten Ausführungsform sind die Elemente OL mit Bedienelementen verschaltet, die der Benutzer z.B. durch Berührung des Bedienelements auf einem entsprechenden Display oder gegebenenfalls durch Anwahl des Bedienelements über Tastatur und/oder Maus im späteren Betrieb des HMI-Systems aktivieren kann. Eine entsprechende Aktivierung des Bedienelements führt dann auch zur Aktivierung des damit verschalteten OpenLink-Elements. Für die OpenLink-Elemente sind bestimmte Eigenschaften (z.B. Properties, Events, Methods) vorab festgelegt. Diese Eigenschaften sind wohlbekannte Funktionselemente aus der Domäne von HMI-Systemen.

Ein jeweiliges Element OL stellt eine universelle Schnittstelle im HMI-Screen SC dar. Wesentlich ist dabei, dass ein OpenLink-Element mit einer Anpassungsschicht AS verknüpft ist, in der ein Code hinterlegt ist, der durch einen Systemintegrator festgelegt wurde und zu einem späteren Zeitpunkt auch noch verändert werden kann. Beispielhaft sind in der Figur drei Varianten entsprechender Codes mit Bezugszeichen CO1, CO2 und CO3 bezeichnet. Diese Codes stellen anpassbare Codes im Sinne der Patentansprüche dar. Über jeden der anpassbaren Codes CO1, CO2 und CO3 wird eine flexible und veränderbare Wechselwirkung hin zu einer jeweiligen externen, nicht zum HMI-System gehörigen Applikation AP1, AP2 bzw. AP3 festgelegt.

In dem dargestellten Ausführungsbeispiel können im Konfigurationsmodus für die OpenLink-Elemente OL drei unterschiedliche Verknüpfungen M1, M2 und M3 mit entsprechenden Codes festgelegt werden. Beispielhaft ist in der Figur ein OpenLink-Element über die Verknüpfung M1 mit dem CO1 verknüpft, wohingegen eine anderes OpenLink-Element über die Verknüpfung M2 mit dem Code CO2 und eine weiteres OpenLink-Element über die Verknüpfung M3 mit dem Code CO3 verknüpft ist. Die Verknüpfung M1 beschreibt ein Starten des Codes CO1, wobei anschließend keine weitere Kommunikation zwischen dem HMI-System und dem Code CO1 stattfindet. Die Verknüpfung M2 beschreibt ein Starten des Codes CO2 sowie ein Verbinden mit diesem Code, so dass eine Kommunikation des HMI-Systems mit dem Code CO2 nach dessen Start durchgeführt werden kann. Die Verknüpfung M3 definiert ausschließlich eine Kommunikation zwischen HMI-System und Code CO3, ohne dass ein Starten des Codes CO3 erfolgt. Mit anderen Worten wird die Verknüpfung M3 für einen bereits gestarteten Code verwendet.

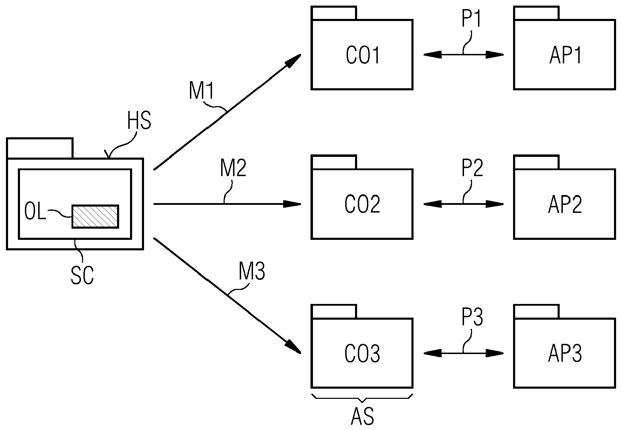

Jeder der anpassbaren Codes CO1, CO2 und CO3 wechselwirkt wiederum mit einer externen Applikation AP1, AP2 bzw. AP3. Beispielhaft sind in Fig. 1 drei unterschiedliche Wechselwirkungen durch Doppelpfeile P1, P2 und P3 angedeutet.

Die Wechselwirkung P1 kann beispielsweise festlegen, dass die Applikation AP1 lediglich gestartet wird und anschließend keine weitere Kommunikation zwischen dem HMI-System und der Applikation stattfindet. Beispielsweise kann die Applikation AP1 ein PDF-Viewer sein, der bei Aktivierung des OpenLink-Elements eine Bedienungsanleitung zu einer Komponente der Automatisierungsanlage in der Form eines PDF-Dokuments öffnet. Das entsprechende Dokument des PDF-Viewers kann dabei auf dem Display, auf dem sich der HMI-Screen befindet, oder gegebenenfalls auch auf einem anderen Display dargestellt werden.

Die Wechselwirkung P2 kann beispielsweise das Starten der Applikation AP2 sowie ein Verbinden mit dieser Applikation beschreiben, so dass eine Kommunikation des HMI-Systems mit der Applikation AP2 nach deren Start durchgeführt werden kann. Beispielsweise kann die Applikation AP2 wiederum ein PDF-Viewer sein, der basierend auf der Wechselwirkung P2 gestartet wird und einen bestimmen Abschnitt eines PDF-Dokuments anzeigt, der sich jedoch verändern kann, wenn sich der Kontext auf dem HMI-Screen SC verändert, d.h. wenn beispielsweise im HMI-Screen neue Informationen zu anderen Komponenten der Automatisierungsanlage aufgerufen werden, wobei diese Informationen in einem anderen Teil des PDF-Dokuments beschrieben sind. Die Wechselwirkung P3 kann beispielsweise eine Kommunikation zwischen HMI-System und Applikation AP3 beschreiben, ohne dass ein Starten der Applikation erfolgt. Mit anderen Worten ist in diesem Fall die Applikation bereits gestartet

Die Verknüpfung der Anpassungsschicht AS mit den entsprechenden OpenLink-Elementen basiert auf an sich bekannten Technologien. Insbesondere werden bei der Verknüpfung der Codes CO1 und CO2 mit dem OpenLink-Element sog. Pipes verwendet, wohingegen bei der Verknüpfung des Codes CO3 mit dem OpenLink-Element sog. Named Pipes genutzt werden. Ebenso können Domain Sockets, Sockets und dergleichen zur Verknüpfung genutzt werden.

Beispielsweise handelt es sich bei den Codes CO1 bis CO3 um Skripte, das leicht durch den Systemintegrator verändert werden können. Insbesondere kann der jeweilige Code ein Batch- oder Powershell-Skript sein, welches eine Reihe von Kommandos ausführt. Ebenso kann das Skript auf der an sich bekannten Skriptsprache Python basieren. Im Falle, dass der Code auf Daten aus dem HMI-Screen zugreifen muss, kann hierfür auch ein einfaches zeichenbasiertes Protokoll genutzt werden.

Vorzugsweise beschreiben die entsprechenden Codes die Wechselwirkung mit den jeweiligen Applikationen basierend auf einer vorgegebenen Programmierschnittstelle, welche die Applikationen zur Verfügung stellen. Bei der Verwendung von Windows werden hierfür oft die Schnittstellen COM, OLE-Automation, VBA und DDE genutzt.

Gegebenenfalls ist es auch möglich, dass die entsprechende Applikation keine Programmierschnittstelle für die notwendige Wechselwirkung mit dem HMI-System bereitstellt. In diesem Fall kann die Wechselwirkung zwischen HMI-System und der Applikation über die Simulation von Benutzereingaben und Benutzerausgaben zwischen HMI-System und Applikation erfolgen.

Entsprechende Werkzeuge für diese Simulation sind aus dem Umfeld der Test-Automatisierung bekannt (z.B. AutoIT, Winuim, Sikuli, Pywinauto).

In einer bevorzugten Ausführungsform wird über die entsprechenden OpenLink-Elemente auch festgelegt, wann die Wechselwirkung zwischen der Applikation und dem HMI-System aktiviert wird, wobei diese Festlegung vom Projektierer im Rahmen der Konfiguration des HMI-Systems vorgenommen wird. Beispielsweise kann die Wechselwirkung bereits dann initiiert werden, wenn der konfigurierte HMI-Screen geöffnet wird und damit die OpenLink-Elemente geladen werden. Ebenso kann die Aktivierung durch die vorab im Rahmen der Projektierung definierte Innen-Verschaltung (z.B. Skript im HMI-Screen) erfolgen.

Über die jeweiligen OpenLink-Elemente können auch weitere Verhaltenseigenschaften der Wechselwirkung zwischen dem HMI-System und der Applikation festgelegt werden. Beispielsweise können Regeln zum Beenden des gestarteten Codes und damit ggf. der Applikation) (z.B. implizit, wenn HMI-Screen beendet wird, explizit oder gar nicht) oder Eigenschaften der Kommunikationsverbindung (stream, message, buffered und dergleichen) festgelegt werden. Ferner kann eine Zeichencodierung in der Kommunikationsverbindung (UTF-8 und dergleichen) sowie gegebenenfalls auch die Protokoll-Komplexität der Kommunikation (einfache String-Codierung, JSON-Codierung (JSON = JavaScript Object Notation) und dergleichen) definiert werden. Darüber hinaus ist es auch möglich, dass ein Teil dieser Eigenschaften auch nach dem Verbindungsaufbau zwischen HMI-System und Code dynamisch durch den Code geändert werden, so dass auch ohne Änderung in der Projektierung das Umstellen auf neue Anforderungen durchgeführt werden kann.

In einer weiteren Variante des oben beschriebenen HMI-Systems besteht gegebenenfalls auch die Möglichkeit, dass ein Benutzer im Rahmen der Projektierung des HMI-Screens auch solche OpenLink-Elemente konfigurieren kann, welche direkt ohne Zwischenschaltung von anpassbarem Code mit einer Applikation wechselwirken.

Die im Vorangegangenen beschriebenen Ausführungsformen der Erfindung weisen eine Reihe von Vorteilen auf. Insbesondere wird mit den OpenLink-Elementen in Kombination mit den verknüpften Codes eine sehr einfache, dabei aber sehr universell einsetzbare und langzeitstabile Schnittstelle geschaffen, welche die Integration mit beliebigen zusätzlichen Applikationen ermöglicht. Dabei können gegebenenfalls auch Applikationen genutzt werden, welche für diesen Einsatz nie vorbereitet waren (keine Programmierschnittstelle) und auch nicht mehr erweitert werden können.

Durch die Verwendung der obigen Anpassungsschicht kann der Entwicklungsaufwand für das HMI-System gering gehalten werden, da jeder Verwender des HMI-Systems spezifisch über entsprechenden Code Schnittstellen zwischen externen Applikationen und dem HMI-System festlegen kann. Darüber hinaus laufen die Codes der Anpassungsschicht sowie die externen Applikationen in einem eigenen Prozessraum. Demzufolge kann sich kein Fehlverhalten der Codes bzw. der Applikationen negativ auf das HMI-System auswirken. Aus Sicht des Projektierers erfolgt die Projektierung des HMI-Systems in an sich bekannter Weise mit Mitteln von Engineering-Werkzeugen, die der Projektierer innerhalb des HMI-Systems gewohnt ist. Die über die OpenLink-Elemente definierte und über die entsprechenden Codes implementierte Schnittstelle stellt aus Sicht des HMI-Screens eine natürliche Erweiterung dar, die sich äquivalent zu allen anderen Elementen des HMI-Screens verhält.

Aus Sicht des Systemintegrators, der für die Erstellung der anpassbaren Codes verantwortlich ist, stellt sich die Kommunikation zum HMI-System als ein Standardmittel der Plattform dar (pipes). Dieses Standardmittel kann durch Code in jedem Programm, in jeder Programmiersprache bzw. jeder Skriptsprache realisiert werden (C, C++, .NET/C-Sharp, Java, JavaScript, PHP, Python, Ruby, CMD, Powershell, bash und dergleichen). Damit hat der Systemintegrator die Wahl und kann in der Umgebung bleiben, die für ihn gewohnt, komfortabel und passend ist.

## Patentansprüche

1. HMI-System für eine Automatisierungsanlage, wobei das HMI-System (HS) in einem Konfigurationsmodus betreibbar ist, in dem eine Benutzeroberfläche (SC) durch einen Benutzer für den Betrieb des HMI-Systems (HS) mit der Automatisierungsanlage konfiguriert werden kann, **dadurch gekennzeichnet, dass** das HMI-System (HS) derart ausgestaltet ist, dass in dem Konfigurationsmodus durch den Benutzer ein oder mehrere Elemente (OL) konfiguriert werden können, um eine Verknüpfung eines jeweiligen Elements (OL) mit einem anpassbaren Code (CO1, CO2, CO3) festzulegen, der eine Wechselwirkung zwischen dem HMI-System (HS) und einer externen, nicht zum HMI-System (HS) gehörigen Applikation (AP1, AP2, AP3) bei einer Aktivierung des jeweiligen Elements (OL) im Betrieb des HMI-Systems (HS) beschreibt.

2. HMI-System nach Anspruch 1, **dadurch gekennzeichnet, dass** für zumindest einen Teil der Elemente (OL) der Code (CO1, CO2, CO3) textueller Code (CO1, CO2, CO3) ist.

3. HMI-System nach Anspruch 2, **dadurch gekennzeichnet, dass** für zumindest einen Teil der Elemente (OL) der Code (CO1, CO2, CO3) ein Skript ist, insbesondere ein Batch-Skript und/oder ein Powershell-Skript und/oder ein Python-Skript.

4. HMI-System nach einem der vorhergehenden Ansprüche, **dadurch gekennzeichnet, dass** ein oder mehrere Elemente (OL) mit Bedienelementen verschaltet sind, welche durch eine Bedienung des Benutzers im Betrieb des HMI-Systems (HS) aktivierbar sind.

5. HMI-System nach einem der vorhergehenden Ansprüche, **dadurch gekennzeichnet, dass** für zumindest einen Teil der Elemente (OL) als Verknüpfung mit dem anpassbaren Code (CO1, CO2, CO3) im Konfigurationsmodus ein Starten des anpassbaren Codes (CO1, CO2, CO3) festlegbar ist.

6. HMI-System nach einem der vorhergehenden Ansprüche, **dadurch gekennzeichnet, dass** für zumindest einen Teil der Elemente (OL) als Verknüpfung mit dem anpassbaren Code (CO1, CO2, CO3) im Konfigurationsmodus eine Kommunikation eines gestarteten anpassbaren Codes (CO1, CO2, CO3) mit dem HMI-System (HS) festlegbar ist.

7. HMI-System nach einem der vorhergehenden Ansprüche, **dadurch gekennzeichnet, dass** für zumindest einen Teil der Elemente (OL) der Code (CO1, CO2, CO3) die Wechselwirkung zwischen HMI-System (HS) und externer Applikation (AP1, AP2, AP3) basierend auf einer vorgegebenen Programmierschnittstelle beschreibt, die durch die externe Applikation (AP1, AP2, AP3) bereitgestellt wird, insbesondere basierend auf einer OLE-Automation-Schnittstelle und/oder COM-Schnittstelle und/oder VBA-Schnittstelle und/oder DDE-Schnittstelle.

8. HMI-System nach einem der vorhergehenden Ansprüche, **dadurch gekennzeichnet, dass** für zumindest einen Teil der Elemente (OL) der Code die Wechselwirkung zwischen HMI-System (HS) und externer Applikation (AP1, AP2, AP3) basierend auf der Simulation von Benutzereingaben und Benutzerausgaben zwischen dem HMI-System (HS) und der externen Applikation (AP1, AP2, AP3) beschreibt.

9. HMI-System nach einem der vorhergehenden Ansprüche, **dadurch gekennzeichnet, dass** für zumindest einen Teil der Elemente (OL) die externe Applikation (AP1, AP2, AP3) eine graphische Anzeige umfasst.

10. HMI-System nach einem der vorhergehenden Ansprüche, **dadurch gekennzeichnet, dass** für zumindest einen Teil der Elemente (OL) die externe Applikation (AP1, AP2, AP3) ein PDF-Viewer und/oder ein Tabellenkalkulationsprogramm und/oder ein Textverarbeitungsprogramm ist.

11. Automatisierungsanlage, umfassend ein HMI-System (HS) nach einem der vorhergehenden Ansprüche.
